# EUROPÄISCHE PATENTANMELDUNG

(11) **EP 1 334 863 A2**
(43) Veröffentlichungstag der Anmeldung: **13.08.2003**
(21) Anmeldenummer: 03002453.3
(22) Anmeldetag: 05.02.2003
(51) Int. Cl.: B60K 31/04

(54) **Einstellen der Sollgeschwindigkeit in einer Geschwindigkeitsregelungseinrichtung**

(30) Priorität: 08.02.2002 DE 10205226
(71) Anmelder: AUDI AG, 85045 Ingolstadt (DE)
(72) Erfinder: Hofbauer, Manfred, 85092 Kösching (DE)
(74) Vertreter: Thielmann, Frank

(57) **Zusammenfassung**

Kraftfahrzeug mit einer Einrichtung zur Regelung der Ist-Geschwindigkeit derart, dass die erfasste Ist-Geschwindigkeit einem eingestellten Geschwindigkeits-Sollwert durch automatisches Regelung oder Steuerung des Antriebsaggregats entspricht, wobei dem Geschwindigkeits-Sollwert (vₛₒₗₗ) ein Werteintervall (Δv) zugeordnet ist, in welchem der Sollwert (vₛₒₗₗ) liegt, wobei die Einrichtung regelnd erst dann eingreift, wenn die Ist-Geschwindigkeit (vᵢₛₜ) außerhalb des Werteintervalls (Δv) liegt.

## Beschreibung

Die Erfindung betrifft ein Kraftfahrzeug mit einer Einrichtung zur Regelung der Ist-Geschwindigkeit derart, dass die erfasste Ist-Geschwindigkeit einem eingestellten Geschwindigkeits-Sollwert durch automatische Regelung des Antriebsaggregats entspricht.

Kraftfahrzeuge mit einer Geschwindigkeitsregelanlage sind bekannt. Diese Geschwindigkeitsregelanlage dient dazu, eine voreingestellte Soll-Geschwindigkeit kontinuierlich beizubehalten. Hierzu wird die Ist-Geschwindigkeit erfasst und kontinuierlich mit dem eingestellten Sollwert verglichen. Je nachdem ob eine Übereinstimmung oder Abweichung gegeben ist, wird das Antriebsaggregat geregelt. Ist die Ist-Geschwindigkeit kleiner als der Sollwert, so wird beschleunigt, anderenfalls die Kraftstoffzufuhr reduziert oder gestoppt, so dass das Fahrzeug in den Schubbetrieb übergeht. Die Geschwindigkeitsregelung dieser Art ist hinreichend bekannt.

Nachteilig bei den bekannten Regelanlagen ist jedoch, dass die Regelung zur Nachführung der Ist-Geschwindigkeit kontinuierlich eingreift, sobald eine Abweichung Ist-Soll erkannt wird. Zwar arbeitet die Nachführung mit einer gewissen Unschärfe derart, dass minimale Abweichungen der Ist-Geschwindigkeit von der Soll-Geschwindigkeit um z.B. ± 1 km/h noch nicht zu einer sofortigen Nachführung führen. Derartige Abweichungen treten jedoch zwangsläufig andauernd ein, insbesondere bei minimalen Fahrbahnunebenheiten. In diesen Fällen, insbesondere bei kleinen Anstiegen, wird automatisch nachgeregelt, was letztlich in einer Erhöhung des Kraftstoffverbrauchs resultiert. Nachteilig ist auch die bis dato vorgenommene Arbeitsweise bei einer Überschreitung des Geschwindigkeits-Sollwerts. Hier erfolgt sofort eine deutliche Reduzierung oder eine Unterbrechung der Kraftstoffzufuhr, so dass das Fahrzeug in den Schubbetrieb übergeht und hier eine Bremswirkung erzielt wird. Diese erfolgt bei sehr kleinen Gefällen, die lediglich zu einer minimalen Geschwindigkeitszunahme führen. In diesem Fall wirkt der häufig sofort eingeleitete Schubbetrieb quasi energievernichtend, da das ansonsten auf diese Weise nicht gebremste Fahrzeug etwas kinetische Energie aufnehmen könnte. Insgesamt ist die starre Regelung im Rahmen bekannter Geschwindigkeitsregelverfahren je nachdem, ob beschleunigt oder verzögert werden soll, entweder häufig unnötig energieverbrauchend oder aber energievernichtend.

Der Erfindung liegt damit das Problem zugrunde, ein Kraftfahrzeug mit einer Einrichtung zur Geschwindigkeitsregelung anzugeben, die die genannten Nachteile beseitigt.

Zur Lösung dieses Problems ist bei einem Kraftfahrzeug der genannten Art erfindungsgemäß vorgesehen, dass dem Geschwindigkeits-Sollwert ein Werteintervall zugeordnet ist, in welchem der Sollwert liegt, wobei die Einrichtung regelnd erst dann eingreift, wenn die Ist-Geschwindigkeit außerhalb des Werteintervalls liegt.

Die Erfindung schlägt vor, anstelle der bekannten starren Regel- oder Steuerungsgrenze bezogen auf den Sollwert die Geschwindigkeitsnachführung wesentlich flexibler hand zuhaben. Erfindungsgemäß ist dem Geschwindigkeits-Sollwert ein relativ breites Werteintervall, das vornehmlich wenigstens 20 km/h, insbesondere wenigstens 40km/h breit ist zugeordnet. Erst dann, wenn sich in einem Vergleich ergibt, dass die Ist-Geschwindigkeit außerhalb dieses Werteintervalls liegt, erfolgt die Nachführung der Geschwindigkeit. Dies führt bei einer leichten Bergfahrt dazu, dass die Geschwindigkeit langsam abnimmt. Solange jedoch die Ist-Geschwindigkeit innerhalb des Werteintervalls liegt, erfolgt noch keine Nachführung. Erst bei einem Unterschreiten der Grenze wird mäßig beschleunigt. Dies führt zwar zu einer Erhöhung des Kraftstoffverbrauchs, jedoch setzt diese Erhöhung wesentlich später ein, ferner befindet sich das Fahrzeug insbesondere bei kürzeren Anstiegen dann gegebenenfalls bereits wieder in einem flachen, ebenen Fahrbahnabschnitt, wo zum Nachführen der Geschwindigkeit wesentlich weniger Kraftstoff benötigt wird. Insgesamt ergibt sich bei einer Bergfahrt eine beachtliche Möglichkeit zur Kraftverbrauchsreduzierung, wenn die starre Geschwindigkeitsnachführung zugunsten der erfindungsgemäß vorgeschlagenen Nachführung aufgegeben wird.

Entsprechendes gilt bei einem leichten Gefälle. Das Fahrzeug kann hier so lange Geschwindigkeit aufnehmen, bis die Ist-Geschwindigkeit die Obergrenze des Werteintervalls übersteigt. Erst dann wird die Kraftstoffzufuhr gedrosselt und gegebenenfalls vollständig in ihren Schubbetrieb übergegangen. Die Zunahme der Geschwindigkeit stellt nichts anderes als eine Aufnahme kinetischer Energie dar, die nicht aufgenommen werden würde, wenn unmittelbar wie im Stand der Technik in den Schubbetrieb übergegangen werden würde. Diese zusätzlich aufgenommene Energie kann verbrauchsverringernd nach dem Gefälle, wenn z. B. wieder ein leichter Anstieg folgt, verbraucht werden.

Es besteht die Möglichkeit, den Geschwindigkeits-Sollwert an eine der Intervallgrenzen zu legen, das heißt in einem solchen Fall würde entweder eine Bergfahrt oder eine Gefällefahrt, je nachdem ob der Sollwert an der Oberoder Untergrenze des Werteintervalls liegt, erfindungsgemäß geregelt oder gesteuert werden. Zweckmäßig ist es, um in beiden möglichen Fällen eine vorteilhafte Regelung vorzunehmen, wenn der Geschwindigkeits-Sollwert kleiner als die Obergrenze und größer als die Untergrenze, insbesondere in der Mitte des Intervalls liegend ist.

Wenngleich feste Werteintervalle zugeordnet werden können, sieht eine vorteilhafte Erfindungsausgestaltung vor, dass die Größe des Werteintervalls von dem eingestellten Geschwindigkeits-Sollwert abhängig ist. Bei hoher Fahrtgeschwindigkeit, z.B. 160 km/h, kann ein größeres Werteintervall von z.B. 50 km/h zugeordnet werden, während bei einer Fahrtgeschwindigkeit von z.B. lediglich 90 km/h ein Werteintervall von beispielsweise 20 km/h zugeordnet werden kann. Die Wahl, welches Werteintervall nun zugeordnet wird, erfolgt seitens einer die Geschwindigkeitsregelung vornehmende Steuerungseinrichtung, in der entsprechende Werteintervalle sollgeschwindigkeitsbezogen abgelegt sind.

Um für den Kraftfahrer die Möglichkeit zu geben, den Regelungsbetrieb individuell gestalten zu können, können zweckmäßigerweise Mittel zum Wählen zwischen einer Regelung ohne zugeordnetem und mit zugeordnetem Wertebereich vorgesehen sein. Das heißt der Kraftfahrer kann wählen, ob er wie bisher mit einer quasi starren Nachführung oder mit der erfindungsgemäßen flexiblen Nachführung arbeiten möchte. Zweckmäßigerweise wird ihm die gewählte Regelungsart über ein Anzeigemittel, insbesondere eine optische Anzeige zur Kenntnis gebracht.

Eine zweckmäßige Weiterbildung der Erfindung sieht vor, dass Mittel zum Erfassen eines Fahrbahnanstiegs und/oder eines Fahrbahngefälles vorgesehen sein können, wobei die Regelung basierend allein auf dem eingestellten Geschwindigkeits-Sollwert oder unter Berücksichtigung des Werteintervalls abhängig vom Erfassungsergebnis ist. Der erfindungsgemäße Regelungsmodus wird beispielsweise dann nicht zugeschalten, wenn die Fahrbahn sehr steil ansteigt, um zu verhindern, dass das Fahrzeug abrupt langsamer wird, bis die Regelung eingreift. Ein solches aufgrund des steilen Anstiegs abruptes Verzögern bedeutet eine Gefahrensituation für die nachfolgenden Kraftfahrer, insbesondere da bei diesem relativ abrupten Verzögern keine Bremsleuchten angehen, wie dies der Fall wäre, wenn aktiv gebremst wird. Wird also ein steiler Fahrbahnanstieg erfasst, so erfolgt eine Geschwindigkeitsnachführung gemäß dem Stand der Technik, also bei einem unmittelbaren Unterschreiten des eingestellten Geschwindigkeits-Sollwerts. Entsprechendes gilt auch bei einem extremen Gefälle. Bei einem extremen Gefälle nimmt das Fahrzeug derart schnell an Geschwindigkeit zu, dass ein zu später Übergang in den Schubbetrieb mithin nicht ausreichend sein kann, die Geschwindigkeit hinreichend zu erniedrigen oder bestenfalls beizubehalten. Auch in solchen Fällen empfiehlt es sich, sofort in den Schubbetrieb überzugehen, wenn ein starkes Gefälle detektiert wird.

Geeignete Mittel hierfür können wenigstens ein Sensorelement umfassen, das eine derartig extreme Fahrbahnunebenheit erfasst. Denkbar sind z.B. Neigungssensoren oder dergleichen. Zusätzliche oder alternative Mittel zur Erfassung eines starken Fahrbahnanstiegs oder -gefälles können weiterhin Mittel zum Erfassen von einen Fahrbahnanstieg oder einen Fahrbahngefälle anzeigenden Verkehrszeichen umfassen. Bekanntermaßen sind extreme Anstiege oder Gefälle mit Warnschildern rechtzeitig gekennzeichnet, die den Anstieg oder das Gefälle prozentual anzeigen. Die Mittel zur Verkehrszeichenerfassung, die im Stand der Technik als sogenannte "traffic sign recognition"-Systeme bekannt sind, sind im Stande derartige Verkehrszeichen auf Grundlage von die Fahrbahn zeigenden, vom Fahrzeug aus aufgenommenen Bildern zu analysieren und in ihrem Regelungsgehalt und ihrer Regelungswirkung für das betroffenen Kraftfahrzeug zu erkennen. Wurde also beispielsweise ein Anstieg mit einer Steigung von 10% erfasst, so erfolgt beispielsweise automatisch die Unterdrückung der Werteintervallzuordnung.

Auf Basis der Erfindung können weiterhin Mittel zum Erfassen von geschwindigkeitsbegrenzenden Verkehrszeichen vorgesehen sein, wobei der Betrieb der Einrichtung zur Regelung der Ist-Geschwindigkeit allgemein oder die Regelung oder Steuerung basierend allein auf dem eingestellten Geschwindigkeits-Sollwert oder unter Berücksichtigung des Werteintervalls abhängig vom Erfassungsergebnis ist. Wird beispielsweise die Geschwindigkeit der befahrenen Fahrbahn z. B. im Baustellenbereich auf 80 km/h beschränkt, so ist unbedingt zu vermeiden, dass aufgrund einer eingeschalteten Geschwindigkeitsregelanlage eine unzulässige Überschreitung der gebotenen Richtgeschwindigkeit eintritt. Zu diesem Zweck sind die Verkehrszeichenerfassungsmittel vorgesehen, die solche geschwindigkeitsbegrenzenden Zeichen erfassen und analysieren. Ist beispielsweise eine Geschwindigkeitsbegrenzung von 80 km/h angezeigt, und ist die Geschwindigkeitsregeleinrichtung eingeschaltet mit einem Geschwindigkeits-Sollwert von 120 km/h, so muss die geschwindigkeitsregelnde Einrichtung zwingend ausgeschaltet werden, um eine verbotswidrige Geschwindigkeitsüberschreitung zu vermeiden. Ist beispielsweise eine Soll-Geschwindigkeit von 80 km/h bei gebotenen 80 km/h Richtgeschwindigkeit eingestellt, so kann zwar mit der Geschwindigkeitsregelung gefahren werden, jedoch darf eine Erhöhung nicht eintreten, was der Fall wäre, wenn in diesem Fall z. B. das Werteintervall, das beispielsweise auch Geschwindigkeiten von 100 km/h zulassen würde, berücksichtigt wird. Nach dieser Erfindungsausgestaltung ist dies nicht der Fall, da in solchen Fällen, wenn der eingestellte Geschwindigkeits-Sollwert mit dem gebotenen und erfassten Richtgeschwindigkeitswert korrespondiert oder kleiner als dieser ist, lediglich eine begrenzte Geschwindigkeitsregelung möglich ist. Ist beispielsweise der Geschwindigkeits-Sollwert um lediglich 10km/h kleiner als der Geschwindigkeitsrichtwert, so kann beispielsweise bei einem Werteintervall von ± 20 km/h eine Geschwindigkeitserhöhung bis lediglich + 10km/h, also bis maximal den Geschwindigkeitsrichtwert erfolgen. Insgesamt bietet diese Erfindungsausgestaltung die Möglichkeit, den Regelungbetrieb in Abhängigkeit etwaiger geschwindigkeitsbegrenzender Verkehrszeichen zu gestalten.

Eine weitere Gefahrensituation kann sich dann ergeben, wenn aufgrund der eingeschalteten Geschwindigkeitsregeleinrichtung, insbesondere bei Berücksichtigung des Werteintervalls eine unzulässige Annäherung an ein vorausfahrendes Kraftfahrzeug eintritt. Befindet man sich beispielsweise auf einer Gefällestrecke und ist die Geschwindigkeitsregeleinrichtung unter Berücksichtigung des Werteintervalls eingeschaltet, so nimmt das Fahrzeug kontinuierlich Fahrt auf, bis die Intervallobergrenze erreicht ist. Da das Kraftfahrzeug nun in den Schubbetrieb übergeht, dabei aber bevorzugt natürlich die Intervallobergrenze hält, kann eine unzulässige Annäherung eintreten, wenn das eigene Kraftfahrzeug schneller als das vorausfahrende ist. Um dem zu begegnen können Mittel zum Erfassen des Abstands des Kraftfahrzeugs zu einem vorausfahrenden Kraftfahrzeug vorgesehen sein, wobei der Betrieb der Einrichtung zur Regelung der Ist-Geschwindigkeit allgemein oder die Regelung basierend allein auf dem eingestellten Geschwindigkeits-Sollwert oder unter Berücksichtigung des Werteintervalls abhängig vom Erfassungsergebnis ist. Ist also beispielsweise der Abstand zu gering so kann die Regelungseinrichtung gänzlich ausgeschaltet oder überhaupt nicht zugeschaltet werden. Entsprechendes gilt hinsichtlich der unterschiedlichen genannten Betriebsmodi.

An dieser Stelle ist darauf hinzuweisen, dass bei Berücksichtigung des Werteintervalls und einer Über- oder Unterschreitung der Ober- oder Untergrenze bei Gefälle- oder Bergfahrt und einsetzender Nachführung der Geschwindigkeit die Geschwindigkeit entweder auf den eingestellten Sollwert zurückgeführt oder aber nur auf die Ober- oder Untergrenze des Werteintervalls zurückgeführt werden kann. Letzteres ist zweckmäßiger, da sich die eingangs beschriebenen energetischen Vorteile in diesem Fall in stärkerem Maße ergeben.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze eines erfindungsgemäßen Kraftfahrzeugs mit den wesentlichen Komponenten, und
- Fig. 2: ein Flussdiagramm zur Darstellung des Regelungs- oder Steuerablaufs.

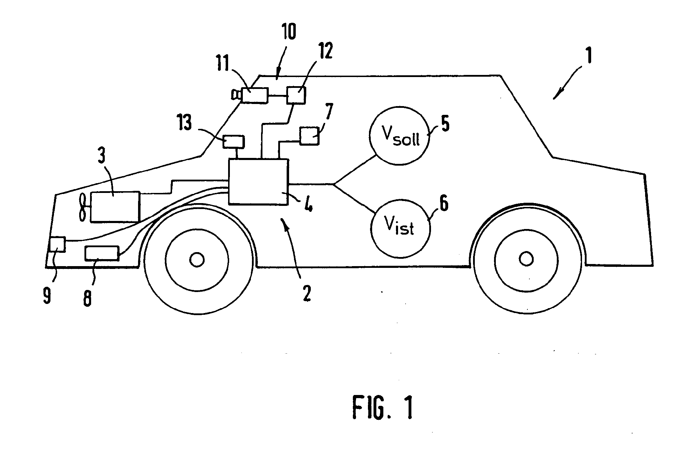

Fig. 1 zeigt ein erfindungsgemäßes Kraftfahrzeug 1 mit einer Einrichtung 2 zur Regelung der Ist-Geschwindigkeit des Kraftfahrzeugs 1 durch entsprechenden Eingriff in den Betrieb des Antriebsaggregats 3, also hier des Kraftfahrzeugmotors. Der Geschwindigkeitsregelungseinrichtung 2 bzw. deren Steuerungseinrichtung 4 wird eine Soll-Geschwindigkeit 5 gegeben, welche vom Kraftfahrer festgelegt wird, indem er z. B. auf eine bestimmte Geschwindigkeit beschleunigt und anschließend einen Speicherknopf oder dergleichen betätigt, über den die momentan gefahrene Geschwindigkeit als Soll-Geschwindigkeit definiert wird. Diese Geschwindigkeit wird nun versucht zu halten, wozu der Steuerungseinrichtung 4 die Ist-Geschwindigkeit gegeben wird, also die gerade gefahrene Geschwindigkeit. Weicht diese hinreichend deutlich von der Soll-Geschwindigkeit ab, so erfolgt eine Nachregelung des Antriebsaggregats derart, dass je nach Über- oder Unterschreiten beschleunigt oder verzögert wird. Diese Beschleunigung oder Verzögerung erfolgt jedoch nicht bei einem noch so geringen Über- oder Unterschreiten der Soll-Geschwindigkeit. Vielmehr ist der Soll-Geschwindigkeit ein Werteintervall zugeordnet, in welchem der Sollwert liegt, wobei dieses Werteintervall vorzugsweise symmetrisch um den Soll-Geschwindigkeitswert liegt. Das Werteintervall kann z. B. ± 10 km/h um den Geschwindigkeits-Sollwert betragen, es kann aber auch kleiner oder größer sein, beispielsweise je nachdem wie groß die vom Fahrer definierte Soll-Geschwindigkeit ist.

Beim erfindungsgemäßen Kraftfahrzeug erfolgt nun eine Regelung des Antriebsaggregats zur Nachführung erst dann, wenn die Ist-Geschwindigkeit außerhalb des Werteintervalls liegt, das heißt wenn sie den unteren oder oberen Intervallgrenzwert unter- oder überschreitet. Dies ist dahingehend von Vorteil, als nicht jede Geschwindigkeitsab- oder -zunahme sofort einer Geschwindigkeitsnachführung bedarf, wie bereits einleitend ausführlich beschrieben wurde.

Der Kraftfahrer selbst kann durch Betätigen eines Wählschalters 7 wählen, ob er die Geschwindigkeitsregeleinrichtung 2 unter Berücksichtigung des den Geschwindigkeits-Sollwert zugeordneten Wertebereichs betreiben möchte, oder ob sie wie bisher im Stand der Technik betrieben werden soll, das heißt ohne Zuordnung eines solchen Wertebereichs.

Ferner ist im gezeigten Beispiel ein Sensor 8, z. B. ein Neigungssensor kraftfahrzeugseitig vorgesehen, der mit der Steuerungseinrichtung 4 kommuniziert, und über den ein Gefälle oder eine Steigung erfasst werden kann. Wird ein starkes Gefälle oder ein starker Anstieg detektiert, die zu einem sehr schnellen Beschleunigen bzw. Verzögern der Geschwindigkeit führen, so kann in Abhängigkeit der Größe des Gefälles oder der Steigung seitens der Steuerungseinrichtung 4 die Zuordnung des Werteintervalls aufgehoben werden, also die energiespartechnische Maßnahme im Rahmen der Geschwindigkeitsregelung nicht berücksichtigt werden und der normale Betrieb der Geschwindigkeitsregeleinrichtung erfolgen. In diesem Fall wird beispielsweise bei einem starken Anstieg sofort beschleunigt, um ein abruptes Abbremsen zu vermeiden, Entsprechendes gilt bei einem starken Gefälle, wo sofort in den reinen Schubbetrieb übergegangen wird.

Um zu vermeiden, dass sich infolge der Zulässigkeit der Überschreitung der vorgegebenen Soll-Geschwindigkeit durch die Ist-Geschwindigkeit innerhalb des Werteintervalls eine zu starke Annäherung an das vorausfahrende Kraftfahrzeug ergibt, was zu einer Gefahrensituation führen kann, ist ferner zweckmäßigerweise ein Abstandssensor 9 vorgesehen, der ebenfalls mit der Steuerungseinrichtung 4 kommuniziert. Wird also beispielsweise ein zu geringer Abstand detektiert, so wird die Zuordnung des Werteintervalls aufgehoben und die Geschwindigkeitsregeleinrichtung kehrt zum normalen Regelungsbetrieb ohne Berücksichtigung des Werteintervalls zurück.

Weiterhin ist eine Einrichtung 10 zur Erfassung etwaiger geschwindigkeitsregelnder Verkehrszeichen umfassend eine windschutzscheibenseitig angeordnete Kamera 11 und eine Verarbeitungs- und Auswerteeinrichtung 12 vorgesehen. Mit dieser Einrichtung werden z. B. straßenrandseitig angeordnete geschwindigkeitsbegrenzende Schilder erfasst. Hierdurch soll vermieden werden, dass aufgrund einer oberhalb der begrenzten Geschwindigkeit liegenden Werteintervall-Obergrenze die Geschwindigkeitsbegrenzung überschritten und der Kraftfahrer damit zu schnell fährt, was gegebenenfalls zu einer Verwarnung bis hin zum Führerscheinentzug führen kann. Wird also beispielsweise ein Verkehrsschild erfasst, das die Höchstgeschwindigkeit auf 100 km/h beschränkt, liegt aber die Werteintervall-Obergrenze bei 120 km/h, so wird beispielsweise der nachfolgend als ECO-Modus benannte Betriebsmodus, also der Betriebsmodus der Regeleinrichtung unter Berücksichtigung des Werteintervalls aufgehoben und die Geschwindigkeitsregelung erfolgt allein auf Basis des gegebenen Geschwindigkeitssollwerts. Liegt bereits dieser oberhalb der begrenzten Geschwindigkeit so kann z. B. die Geschwindigkeitsregeleinrichtung 2 gänzlich abgeschaltet werden, oder aber es erfolgt eine Regelung auf Basis des unteren Intervallgrenzwerts oder aber nur auf Basis der erfassten Geschwindigkeitsbegrenzung etc. Hier sind beliebige Varianten denkbar.

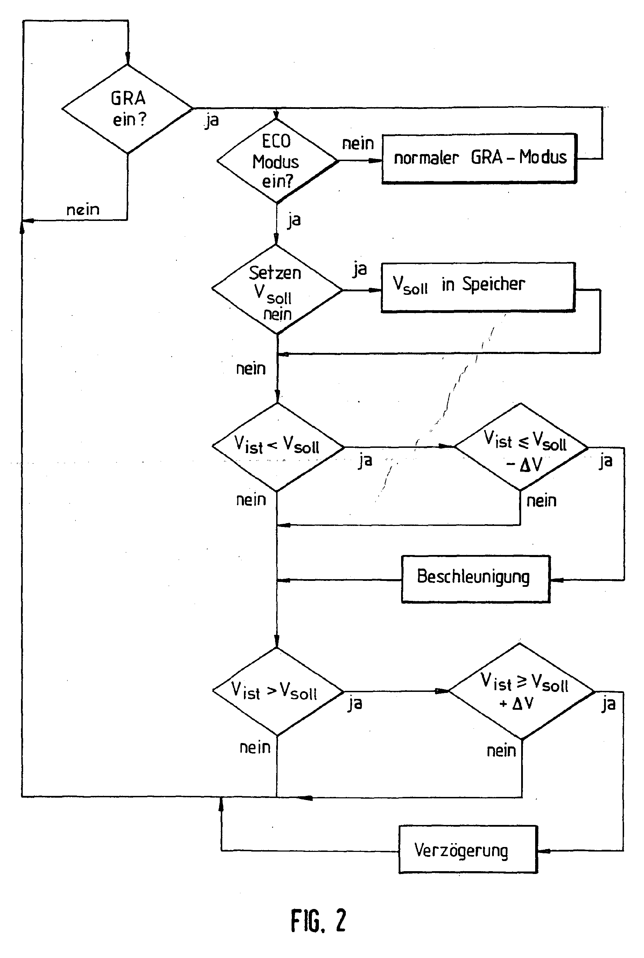

Fig. 2 zeigt in Form eines Ablaufdiagramms den erfindungsgemäßen Steuerungs- oder Regelungsablauf. Zunächst wird in einer ersten Regelschleife überprüft, ob die als GRA benannte Geschwindigkeitsregeleinrichtung überhaupt eingeschalten ist. Falls nicht wird diese Schleife dauernd durchlaufen. Ergibt sich, dass die Geschwindigkeitsregeleinrichtung eingeschaltet ist so wird zunächst geprüft, ob der hier als ECO-Modus benannte Betriebsmodus, also der Betriebsmodus unter Berücksichtigung des zugeordneten Werteintervalls eingeschaltet ist. Falls nicht wird die Geschwindigkeitsregeleinrichtung im normalen GRA-Modus, also ohne Berücksichtigung des Werteintervalls betrieben.

Ist der ECO-Modus eingeschalten (was über den Wählschalter 7 vom Fahrer erfolgen kann) wird zunächst überprüft, ob der Fahrer einen neuen Geschwindigkeits-Sollwert setzt. Falls ja wird dieser Geschwindigkeits-Sollwert in einen geeigneten Speicher in der Steuerungseinrichtung 4 abgelegt. Falls nicht wird mit dem dort bereits vorhandenen Geschwindigkeits-Sollwert gearbeitet. Anschließend wird, nachdem der Steuerungseinrichtung 4 Informationen über die Ist-Geschwindigkeit gegeben wurden, überprüft, ob die Ist-Geschwindigkeit kleiner als die Soll-Geschwindigkeit ist (was in Fig. 2 durch (vᵢₛₜ < vₛₒₗₗ) angegeben ist). Das heißt es wird grundsätzlich überprüft, in welcher Richtung eine Differenz zwischen Ist-Geschwindigkeit und Soll-Geschwindigkeit gegeben ist. Liegt die Ist-Geschwindigkeit unterhalb der Soll-Geschwindigkeit so wird im nächsten Schritt überprüft, ob die Ist-Geschwindigkeit kleiner oder gleich die Soll-Geschwindigkeit abzüglich des sie unterschreitenden Werteintervalls ist, das heißt, ob die Ist-Geschwindigkeit unterhalb der Intervall-Untergrenze liegt (dies ist in Fig. 2 durch (vᵢₛₜ < vₛₒₗₗ - Δv) angegeben). Ist dies der Fall so erfolgt eine Beschleunigung. Anschließend erfolgt die Abfrage "vᵢₛₜ > vₛₒₗₗ", die mit "nein" zu beantworten ist. Die Schleife kehrt zur Grundabfrage "GRAein" zurück und wiederholt sich unter weitergehender Beschleunigung solange, bis die Ist-Geschwindigkeit wieder innerhalb des Werteintervalls liegt.

Ist die Ist-Geschwindigkeit jedoch nicht kleiner als die Intervalluntergrenze, so kehrt die Regelschleife wieder zur allgemeinen Abfrage zurück, eine Beschleunigung ist in diesem Fall nicht erforderlich.

Hat die Abfrage ergeben, dass die Ist-Geschwindigkeit nicht kleiner als die Soll-Geschwindigkeit ist, so wird im nächsten Schritt überprüft, ob die Ist-Geschwindigkeit größer als die Soll-Geschwindigkeit ist, was durch (vᵢₛₜ > vₛₒₗₗ) in Fig. 2 dargestellt ist. Ist dies der Fall, das heißt fährt das Fahrzeug schneller als die eingestellte Soll-Geschwindigkeit, so wird geprüft, ob die Ist-Geschwindigkeit größer als die Intervall-Obergrenze ist, was in Fig. 2 durch (vᵢₛₜ > vₛₒₗₗ + Δv) angegeben ist. Ist dies der Fall so erfolgt eine Verzögerung, das heißt die Steuerungseinrichtung 4 greift z. B. in die Kraftstoffeinspritzanlage ein, so dass weniger Kraftstoff zugeführt wird, oder dass generell in den Schubbetrieb übergegangen wird etc. Man kehrt in der Regelschleife wieder zur Ausgangsprüfung zurück, ob "GRAein" ist und durchläuft diese Regelschleife solange, bis das Fahrzeug so weit heruntergebremst ist, dass die Ist-Geschwindigkeit wieder innerhalb des Werteintervalls liegt. Ergibt sich bei der Überprüfung, ob die Ist-Geschwindigkeit außerhalb des Intervalls liegt, dass dem nicht so ist, so kehrt die Regelschleife zur Ausgangsfrage "GRAein?" zurück. Die dauernde Rückkehr zur Überprüfung "GRAein" ermöglicht die stete Kontrolle, ob die Regeleinrichtung überhaupt noch in Betrieb ist. Auch werden Änderungen des Sollwerts sofort erkannt und können berücksichtigt werden.

Alternativ zur Möglichkeit, die Regelschleifen, die zu einer Beschleunigung oder einer Verzögerung führen, wieder auf die grundlegende Überprüfung "Vᵢₛₜ < Vₛₒₗₗ" bzw. "Vᵢₛₜ > Vₛₒₗₗ" zurückzuführen, besteht auch die Möglichkeit, die Regelschleife lediglich zur Frage "Vᵢₛₜ < Vₛₒₗₗ - Δv" bzw. "Vᵢₛₜ > Vₛₒₗₗ + Δv" zurückzuführen. Es sind also unterschiedliche Regelungsmodi denkbar.

## Patentansprüche

1. Kraftfahrzeug mit einer Einrichtung zur Regelung der Ist-Geschwindigkeit derart, dass die erfasste Ist-Geschwindigkeit einem eingestellten Geschwindigkeits-Sollwert durch automatisches Regelung oder Steuerung des Antriebsaggregats entspricht,
**dadurch gekennzeichnet,**
**dass** dem Geschwindigkeits-Sollwert (vₛₒₗₗ) ein Werteintervall (Δv) zugeordnet ist, in welchem der Sollwert (vₛₒₗₗ) liegt, wobei die Einrichtung regelnd erst dann eingreift, wenn die Ist-Geschwindigkeit (vᵢₛₜ) außerhalb des Werteintervalls (Δv) liegt.

2. Kraftfahrzeug nach Anspruch 1,
**dadurch gekennzeichnet,**
**dass** der Geschwindigkeits-Sollwert (vₛₒₗₗ) kleiner als die Obergrenze und größer als die Untergrenze des Werteintervalls (Δv) ist.

3. Kraftfahrzeug nach Anspruch 2,
**dadurch gekennzeichnet,**
**dass** der Geschwindigkeits-Sollwert (vₛₒₗₗ) in der Mitte des Werteintervalls (Δv) liegt.

4. Kraftfahrzeug nach einem der vorangehenden Ansprüche,
**dadurch gekennzeichnet,**
**dass** das Werteintervall (Δv) wenigstens 20 km/h, insbesondere wenigstens 40km/h groß ist.

5. Kraftfahrzeug nach einem der vorangehenden Ansprüche,
**dadurch gekennzeichnet,**
**dass** die Größe des Werteintervalls (Δv) von dem eingestellten Geschwindigkeits-Sollwert (vₛₒₗₗ) abhängig ist.

6. Kraftfahrzeug nach einem der vorangehenden Ansprüche,
**dadurch gekennzeichnet,**
**dass** Mittel (7) zum Wählen zwischen einer Regelung ohne zugeordnetem und mit zugeordnetem Werteintervall (Δv) vorgesehen sind.

7. Kraftfahrzeug nach Anspruch 6,
**dadurch gekennzeichnet,**
**dass** Mittel (13) zum Anzeigen der gewählten Regelungsart, insbesondere eine optische Anzeige vorgesehen sind.

8. Kraftfahrzeug nach einem der vorangehenden Ansprüche,
**dadurch gekennzeichnet,**
**dass** Mittel (8) zum Erfassen eines Fahrbahnanstiegs und/oder eines Fahrbahngefälles vorgesehen sind, wobei die Regelung basierend allein auf dem eingestellten Geschwindigkeits-Sollwert (vₛₒₗₗ) oder unter Berücksichtigung des Werteintervalls (Δv) abhängig vom Erfassungsergebnis ist.

9. Kraftfahrzeug nach Anspruch 8,
**dadurch gekennzeichnet,**
**dass** die Mittel wenigstens ein Sensorelement (7) umfassen.

10. Kraftfahrzeug nach Anspruch 8,
**dadurch gekennzeichnet,**
**dass** die Mittel ein Mittel (10) zum Erfassen von einen Fahrbahnanstieg oder ein Fahrbahngefälle anzeigenden Verkehrszeichen umfassen.

11. Kraftfahrzeug nach einem der vorangehenden Ansprüche,
**dadurch gekennzeichnet,**
**dass** ferner Mittel (10) zum Erfassen von geschwindigkeitsbegrenzenden Verkehrszeichen vorgesehen sind, wobei der Betrieb der Einrichtung (2) zur Regelung der Ist-Geschwindigkeit (vᵢₛₜ) allgemein oder die Regelung basierend allein auf dem eingestellten Geschwindigkeits-Sollwert (vₛₒₗₗ) oder unter Berücksichtigung des Werteintervalls (Δv) abhängig vom Erfassungsergebnis ist.

12. Kraftfahrzeug nach einem der vorangehenden Ansprüche,
**dadurch gekennzeichnet,**
**dass** Mittel (9) zum Erfassen des Abstands des Kraftfahrzeugs zu einem vorausfahrenden Kraftfahrzeug vorgesehen sind, wobei der Betrieb der Einrichtung (2) zur Regelung der Ist-Geschwindigkeit allgemein oder die Regelung basierend allein auf dem eingestellten Geschwindigkeits-Sollwert (vₛₒₗₗ) oder unter Berücksichtigung des Werteintervalls (Δv) abhängig vom Erfassungsergebnis ist.
